(19) Europäisches Patentamt
European Patent Office
Office européen des brevets

(11) **EP 4 151 485 A2**

(12) **EUROPEAN PATENT APPLICATION**

(43) Date of publication:
**22.03.2023 Bulletin 2023/12**

(21) Application number: **22217104.3**

(22) Date of filing: **29.12.2022**

(51) International Patent Classification (IPC):
**B60W 30/14** (2006.01)

(52) Cooperative Patent Classification (CPC):
**B60W 30/143; B60W 2520/10; B60W 2552/35**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.12.2021 CN 202111681443**

(71) Applicant: **BEIJING BAIDU NETCOM SCIENCE AND TECHNOLOGY CO. LTD.**
**100085 Beijing (CN)**

(72) Inventors:
• **CHANG, Songtao**
**Beijing, 100085 (CN)**
• **SHANGGUAN, Lantian**
**Beijing, 100085 (CN)**
• **JIANG, Jianxin**
**Beijing, 100085 (CN)**

(74) Representative: **Studio Torta S.p.A.**
**Via Viotti, 9**
**10121 Torino (IT)**

(54) **METHOD AND APPARATUS FOR DETERMINING INFORMATION, STORAGE MEDIUM AND COMPUTER PROGRAM PRODUCT**

(57) A method and apparatus for determining information are provided. An implementation of the method includes: acquiring a reference vehicle speed and an actual vehicle speed of an autonomous driving vehicle; determining feedback information based on the reference vehicle speed and the actual vehicle speed; determining vehicle speed control information based on the feedback information and disturbance observation information, where the disturbance observation information is used to indicate a disturbance quantity currently experienced by the autonomous driving vehicle; and determining target disturbance information based on vehicle speed information, the disturbance observation information and a preset estimation model.

200

Fig. 2

**Description**

TECHNICAL FIELD

The present disclosure relates to the field of computer technology, in particular to the field of autonomous driving technology, and more particular, to a method and apparatus for determining information.

BACKGROUND

Autonomous driving vehicles realize the control of vehicle speed through instructions (e.g., throttle valve opening degree, brake pedal opening degree, torque, deceleration, etc.) of vehicle longitudinal actuators. The existing method for controlling vehicle speed is: determining feedback information based on a deviation between a current actual vehicle speed and a reference vehicle speed, and determining an instruction of a vehicle longitudinal actuator based on the feedback information to realize tracking and controlling of the vehicle speed.

However, the existing method realizing tracking and controlling of the vehicle speed based on the deviation between the current actual vehicle speed and the reference vehicle speed has the problems such as large error in tracking of vehicle speed, poor antiinterference, and low accuracy of vehicle speed control.

SUMMARY

Embodiments of the present disclosure provides a method and apparatus for determining information, an electronic device, and a computer readable storage medium.

According to a first aspect, some embodiments of the present disclosure provide a method for determining information. The method includes: acquiring a reference vehicle speed and an actual vehicle speed of an autonomous driving vehicle; determining feedback information based on the reference vehicle speed and the actual vehicle speed; determining vehicle speed control information based on the feedback information and disturbance observation information, wherein the disturbance observation information is used to indicate a disturbance quantity currently experienced by the autonomous driving vehicle; and determining target disturbance information based on vehicle speed information, the disturbance observation information and a preset estimation model, wherein the vehicle speed information is determined based on the vehicle speed control information.

According to a second aspect, some embodiments of the present disclosure provide an apparatus for determining information. The apparatus includes: an acquisition unit, configured to acquire a reference vehicle speed and an actual vehicle speed of an autonomous driving vehicle; a first determining unit, configured to determine feedback information based on the reference vehicle speed and the actual vehicle speed; a second determining unit, configured to determine vehicle speed control information based on the feedback information and disturbance observation information, wherein the disturbance observation information is used to indicate a disturbance quantity currently experienced by the autonomous driving vehicle; and a third determining unit, configured to determine target disturbance information based on vehicle speed information, the disturbance observation information and a preset estimation model, wherein the vehicle speed information is determined based on the vehicle speed control information.

According to a third aspect, some embodiments of the present disclosure provide a non-transitory computer readable storage medium storing computer instructions, where, the computer instructions are used to cause the computer to perform the method according to the first aspect.

According to a fourth aspect, me embodiments of the present disclosure provide a computer program product, comprising a computer program, the computer program, when executed by a processor, cause the processor to perform the method according to the first aspect.

It should be understood that contents described in this section are neither intended to identify key or important features of embodiments of the present disclosure, nor intended to limit the scope of the present disclosure. Other features of the present disclosure will become readily understood in conjunction with the following description.

BRIEF DESCRIPTION OF THE DRAWINGS

The accompanying drawings are used for better understanding of the present solution, and do not constitute a limitation to the present disclosure. In which:

Fig. 1 is an example system architecture diagram to which embodiments of the present disclosure may be applied;

Fig. 2 is a flowchart of a method for determining information according to an embodiment of the present disclosure;

Fig. 3 is a schematic flowchart of the method for determining information according to an application scenario of the present disclosure;

Fig. 4 is a schematic structural diagram of an apparatus for determining information according to an embodiment of the present disclosure; and

Fig. 5 is a block diagram of an electronic device used to implement the method for determining information according to embodiments of the present disclosure.

DETAILED DESCRIPTION OF EMBODIMENTS

Example embodiments of the present disclosure are described below with reference to the accompanying drawings, where various details of the embodiments of the present disclosure are included to facilitate understanding, and should be considered merely as examples. Therefore, those of ordinary skills in the art should realize that various changes and modifications can be made to the embodiments described here without departing from the scope of the present disclosure. Similarly, for clearness and conciseness, descriptions of well-known functions and structures are omitted in the following description.

The method and apparatus for determining information provided by the present disclosure, acquire the reference vehicle speed and the actual vehicle speed of an autonomous driving vehicle; determine the feedback information based on the reference vehicle speed and the actual vehicle speed; determine the vehicle speed control information based on the feedback information and the disturbance observation information, where the disturbance observation information is used to indicate the disturbance quantity currently experienced by the autonomous driving vehicle; and determine the target disturbance information based on the vehicle speed information, the disturbance observation information and a preset estimation model, which may improve an accuracy of determining the target disturbance information, so as to realize precise control of the vehicle speed.

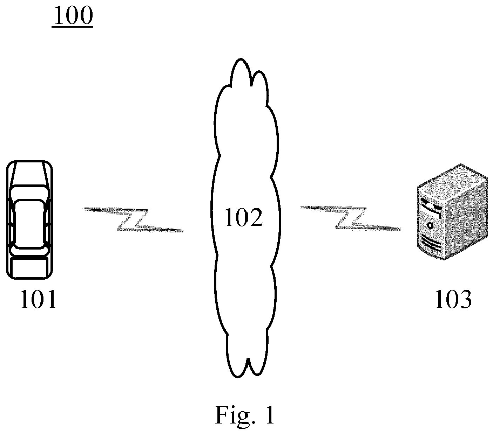

Fig. 1 illustrates an example system architecture 100 to which a method for determining information or an apparatus for determining information according to embodiments of the present disclosure may be applied.

As shown in Fig. 1, the system architecture 100 may include a terminal device 101, a network 102 and a server 103. The network 102 serves as a medium providing a communication link between the terminal device 101 and the server 103. The network 102 may include various types of connections, for example, wired or wireless communication links, or optical fiber cables.

A user may use the terminal device 101 to interact with the server 103 via the network 102 to receive or send messages and the like. Various emulation-type processes or processes for testing the system may be installed on the terminal device 101. Various client applications, such as vehicle control software, may also be installed on the terminal device 101.

The terminal device 101 may be a control platform of an autonomous driving vehicle or a control system of an autonomous driving vehicle, a control device of an autonomous driving vehicle, and the like.

The terminal device 101 may be hardware or software. When the terminal device 101 is hardware, it may be various hardware modules or electronic devices, and when the terminal device 101 is software, it may be installed in the electronic devices listed above. It may be implemented as a plurality of software or software modules (e.g., a plurality of software modules for providing distributed services), or as a single software or software module, which is not specifically limited herein.

The server 103 may acquire a reference vehicle speed and an actual vehicle speed of an autonomous driving vehicle; determine feedback information based on the reference vehicle speed and the actual vehicle speed; determine vehicle speed control information based on the feedback information and disturbance observation information, where the disturbance observation information is used to indicate a disturbance quantity currently experienced by the autonomous driving vehicle; and determine target disturbance information, based on vehicle speed information, the disturbance observation information and a preset estimation model.

It should be noted that the method for determining information provided in the embodiments of the present disclosure is generally performed by the server 103. Correspondingly, the apparatus for determining information is generally provided in the server 103.

It should be understood that the numbers of the devices, the networks and the servers in Fig. 1 are merely illustrative. Any number of devices, the networks and the servers may be provided based on actual requirements.

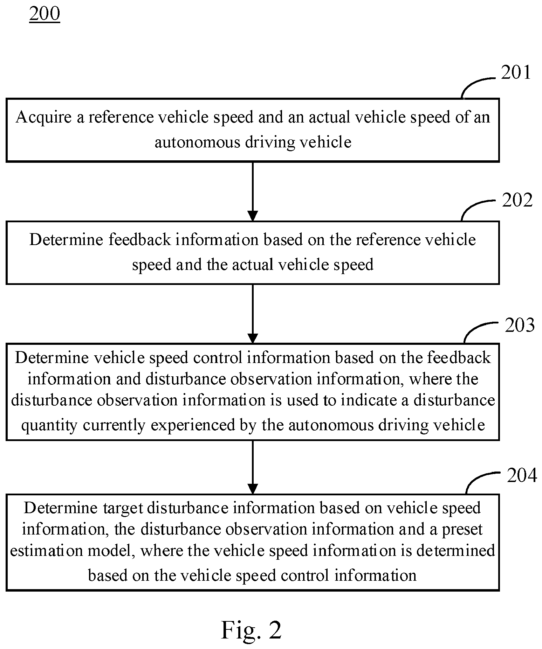

With further reference to Fig. 2, a flow 200 of a method for determining information according to an embodiment of the present disclosure is shown. The method for determining information includes the following steps:

Step 201, acquiring a reference vehicle speed and an actual vehicle speed of an autonomous driving vehicle.

In the present embodiment, an executing body (for example, the server shown in Fig. 1) of the method for determining information may acquire the reference vehicle speed and the actual vehicle speed of the autonomous driving vehicle through wired or wireless means. The reference vehicle speed is a vehicle speed of the autonomous driving vehicle indicated by a user's instruction or an autonomous driving instruction, that is, vehicle speed that the user or the autonomous driving instruction subjectively wants the autonomous driving vehicle to reach; the actual vehicle speed is a current vehicle speed when the vehicle is traveling, which may be determined by a traveling distance and time information in a vehicle speed sensor or a navigation.

Step 202, determining feedback information based on the reference vehicle speed and the actual vehicle speed.

In the present embodiment, the feedback information may be determined based on the reference vehicle speed and the actual vehicle speed. Particularly, the deviation between the reference vehicle speed and the actual vehicle speed may be used as the feedback information.

Step 203, determining vehicle speed control information based on the feedback information and disturbance observation information, where the disturbance observation information is used to indicate a disturbance quantity currently experienced by the autonomous driving vehicle.

In the present embodiment, the vehicle speed control information may be determined based on the feedback information and the disturbance observation information. Particularly, the vehicle speed control information may be determined based on the vehicle speed deviation between the reference vehicle speed and the actual vehicle speed indicated by the feedback information and a vehicle speed deviation caused by the disturbance quantity indicated by the disturbance observation information, so that vehicle speed given by the vehicle speed control information not only considers the vehicle speed deviation indicated by the feedback information, but also considers the deviation introduced by the current disturbance quantity. The disturbance observation information is used to indicate the disturbance quantity currently experienced by the autonomous driving vehicle, for example, a disturbance quantity introduced by a pothole road surface, a disturbance quantity introduced by a road vehicle speed bump, and a disturbance quantity introduced by a ramp environment.

Step 204, determining target disturbance information based on vehicle speed information, the disturbance observation information and a preset estimation model, where the vehicle speed information is determined based on the vehicle speed control information.

In the present embodiment, the vehicle speed information and the disturbance observation information may be input into the preset estimation model, to obtain the target disturbance information calculated by the model.

The method for determining information provided by the present embodiment, acquires the reference vehicle speed and the actual vehicle speed of an autonomous driving vehicle; determines the feedback information based on the reference vehicle speed and the actual vehicle speed; determines the vehicle speed control information based on the feedback information and the disturbance observation information, where the disturbance observation information is used to indicate the disturbance quantity currently experienced by the autonomous driving vehicle; and determines the target disturbance information based on the vehicle speed information, the disturbance observation information and a preset estimation model, thereby improving an accuracy in determining the target disturbance information, so as to realize precise control of the vehicle speed.

Alternatively, the determining vehicle speed control information based on the feedback information and disturbance observation information, includes: determining initial control information based on the feedback information and the disturbance observation information; and inputting the initial control information into a vehicle longitudinal actuator of the autonomous driving vehicle, and determining an output of the vehicle longitudinal actuator as the vehicle speed control information.

In the present embodiment, the feedback information and the disturbance observation information may be used to determine the initial control information, and the initial control information may be input into the vehicle longitudinal actuator of the autonomous driving vehicle, to obtain the vehicle speed control information calculated by the vehicle longitudinal actuator. Here, the vehicle longitudinal actuator may calculate the vehicle speed that the autonomous driving vehicle needs to reach based on the feedback information and the disturbance information, and determine information such as throttle valve opening degree/brake pedal opening degree, torque, or deceleration based on a difference between the current vehicle speed and the calculated vehicle speed that needs to reach, so as to control the vehicle from the current vehicle speed to the calculated vehicle speed that needs to reach.

Alternatively, the determining target disturbance information based on vehicle speed information, the disturbance observation information and a preset estimation model, includes: determining initial control information using the feedback information and the disturbance observation information; and inputting the vehicle speed information and the initial control information into the preset estimation model to obtain the target disturbance information.

In the present embodiment, the feedback information and the disturbance observation information may be used to determine the initial control information, and the actual vehicle speed and the initial control information may be input into the preset estimation model to obtain the target disturbance information output by the preset estimation model.

Alternatively, the inputting the vehicle speed information and the initial control information into the preset estimation model to obtain the target disturbance information, includes: inputting the vehicle speed information and the initial control information into the preset estimation model, to obtain a target total disturbance quantity based on a mathematical calculation result of the preset estimation model.

In the present embodiment, the current vehicle speed and the initial control information may be input into the preset estimation model to obtain the target total disturbance quantity calculated by the model.

In some alternative implementations of the embodiment described above in combination with Fig. 2, the method for determining information further includes: updating the initial control information using the target disturbance information, and determining next moment target disturbance information using the updated initial control information.

In the present embodiment, the target disturbance information determined at the current moment may be used to update the initial control information to obtain an updated initial control information, and the updated initial control information may be used to determine target disturbance information at a next moment, so as to continuously update the target disturbance information, thereby continuously updating the output of the vehicle longitudinal actuator, in order to optimize the actual vehicle speed of the autonomous driving vehicle, so that a final traveling vehicle speed is more accurate and an antiinterference ability of a vehicle speed control system is strong.

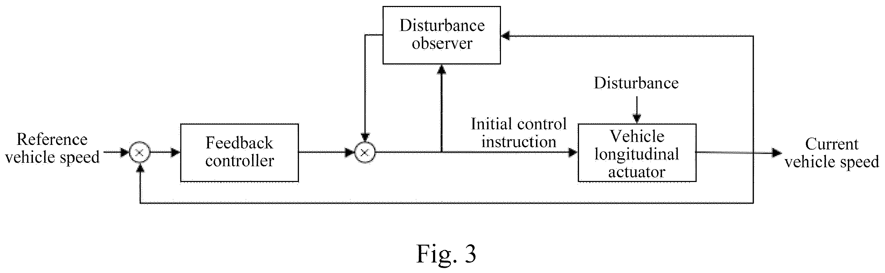

In some application scenarios, as shown in Fig. 3, the method for determining information includes:

estimating current total disturbance (including environmental disturbance, modeling error, etc.) of the autonomous driving vehicle using a disturbance observer, that is, using the disturbance observer to determine the target disturbance information. Input items of the disturbance observer include an initial control instruction and the current vehicle speed.

The input item, i.e., the initial control instruction, is that a feedback controller instruction minus a control instruction corresponding to the disturbance observer.

An input item of the vehicle longitudinal actuator is also that the feedback controller instruction minus the control instruction corresponding to the disturbance observer.

The initial control instruction is input into the preset estimation model to obtain an estimated vehicle speed estimated by the preset estimation model.

The total disturbance (i.e., target disturbance information) is determined based on a difference between the current vehicle speed and the estimated vehicle speed estimated by the model. Then, an initial control instruction at a next moment is optimized based on the total disturbance, so that the final traveling vehicle speed is more accurate and the antiinterference ability of the vehicle speed control system is stronger.

In this method, the mathematical model for calculating the vehicle speed is:

$$\dot{v}(t) = a_u(t) + d(t)$$

$$\dot{a}_u(t) = \frac{1}{T_s}\big(a_{cmd}(t - \tau) - a_u(t)\big)$$

where, v(t) represents the vehicle speed at time t, $\dot{v}(t)$ represents the derivative of $v(t)$; $a_u(t)$ represents the acceleration indicated by the vehicle longitudinal actuator at time t, and $\dot{a}_u(t)$ represents the derivative of $a_u(t)$; $d(t)$ represents total disturbance acceleration (including acceleration introduced by the environmental disturbance, and/or the modeling error) at time t; $a_{cmd}(t - \tau)$ represents an acceleration instruction (i.e., the initial control instruction) at time $(t - \tau)$; $\tau$ represents a delay of an acceleration actuator of the autonomous driving vehicle, and $T_s$ represents a time constant of the acceleration actuator of the autonomous driving vehicle.

In this method, the mathematical model for the disturbance observer is:

$$\dot{\hat{v}}(t) = a_u(t) + \hat{d}(t) + c_1\big(v(t) - \hat{v}(t)\big)$$

$$\dot{\hat{d}}(t) = c_2\big(v(t) - \hat{v}(t)\big)$$

where, $\hat{v}(t)$ represents the estimated vehicle speed at time t, that is, an estimated value of $v(t)$, and $\dot{\hat{v}}(t)$ represents the derivative of $\hat{v}(t)$; $\hat{d}(t)$ represents an estimated value of the total disturbance acceleration at time t, that is, an estimated value of $d(t)$, and $\dot{\hat{d}}(t)$ represents the derivative of $\hat{d}(t)$; and c1, c2 are preset parameters of the disturbance observer, $c_1 > 0$, $c_2 > 0$.

In this method, based on the mathematical model for calculating the vehicle speed and the mathematical model for the disturbance observer, the estimated value $\hat{d}(t)$ of the total disturbance acceleration at time t may be solved, that is, the target disturbance information.

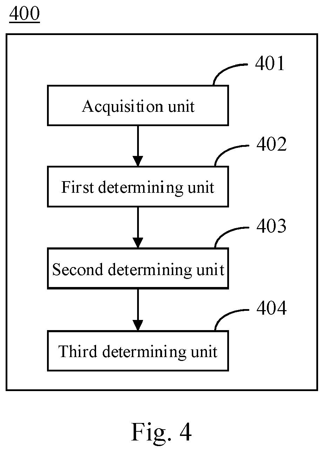

With further reference to Fig. 4, as an implementation of the method shown in the above drawings, an embodiment of the present disclosure provides an apparatus for determining information. The embodiment of the apparatus corresponds to the embodiment of the method shown in Fig. 2, and the apparatus may be applied in various electronic devices.

As shown in Fig. 4, the apparatus 400 for determining information in the present embodiment includes: an acquisition unit 401, a first determining unit 402, a second determining unit 403 and a third determining unit 404. The acquisition unit is configured to acquire a reference vehicle speed and an actual vehicle speed of an autonomous driving vehicle. The first determining unit is configured to determine feedback information based on the reference vehicle speed and the actual vehicle speed. The second determining unit is configured to determine vehicle speed control information based on the feedback information and disturbance observation information, where the disturbance observation information is used to indicate a disturbance quantity currently experienced by the autonomous driving vehicle. The third determining unit is configured to determine target disturbance information based on vehicle speed information, the disturbance observation information and a preset estimation model, where the vehicle speed information is determined based on the vehicle speed control information.

In some embodiments, the second determining unit includes: a first determining module, configured to determine initial control information based on the feedback information and the disturbance observation information; and a second determining module, configured to input the initial control information into a vehicle longitudinal actuator of the autonomous driving vehicle, and determine an output of the vehicle longitudinal actuator as the vehicle speed control information.

In some embodiments, the third determining unit includes: a third determining module, configured to determine initial control information based on the feedback information and the disturbance observation information; and a fourth determining module, configured to input the vehicle speed information and the initial control information into the preset estimation model to obtain the target disturbance information.

In some embodiments, the fourth determining module includes: a disturbance quantity determining module, configured to input the vehicle speed information and the initial control information into the preset estimation model, to obtain a target total disturbance quantity based on a mathematical calculation result of the preset estimation model.

In some embodiments, the apparatus further includes: a compensation unit, configured to update the initial control information using the target disturbance information, and determine next moment target disturbance information using the updated initial control information.

The units in the above apparatus 400 correspond to the steps in the method described with reference to Fig. 2. Therefore, the operations, features, and achievable technical effects described above with respect to the method for determining information are also applicable to the apparatus 400 and the units included therein, and detailed description thereof will be omitted.

According to an embodiment of the present disclosure, an electronic device, a readable storage medium, and a computer program product are provided.

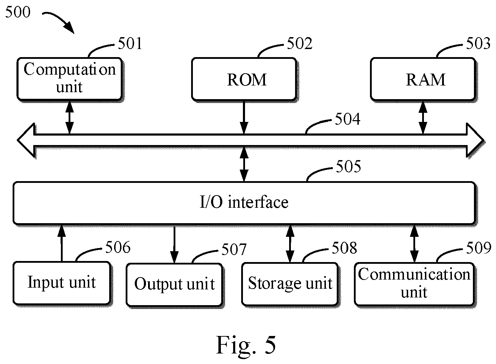

Fig. 5 shows a schematic block diagram of an example electronic device 500 that may be used to implement embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 5, the device 500 includes a computation unit 501, which may execute various appropriate actions and processes in accordance with a computer program stored in a read-only memory (ROM) 502 or a computer program loaded into a random access memory (RAM) 503 from a storage unit 508. The RAM 503 also stores various programs and data required by operations of the device 500. The computation unit 501, the ROM 502 and the RAM 503 are connected to each other through a bus 504. An input/output (I/O) interface 505 is also connected to the bus 504.

The following components in the device 500 are connected to the I/O interface 505: an input unit 506, for example, a keyboard and a mouse; an output unit 507, for example, various types of displays and a speaker; a storage device 508, for example, a magnetic disk and an optical disk; and a communication unit 509, for example, a network card, a modem, a wireless communication transceiver. The communication unit 509 allows the device 500 to exchange information/data with other devices through a computer network such as the Internet and/or various telecommunication networks.

The computation unit 501 may be various general-purpose and/or special-purpose processing assemblies having processing and computing capabilities. Some examples of the computation unit 501 include, but not limited to, a central processing unit (CPU), a graphics processing unit (GPU), various dedicated artificial intelligence (AI) computing chips, various computation units that run a machine learning model algorithm, a digital signal processor (DSP), any appropriate processor, controller and microcontroller, etc. The computation unit 501 performs the various methods and processes described above, for example, the method for determining information. For example, in some embodiments, the method for determining information may be implemented as a computer software program, which is tangibly included in a machine readable medium, for example, the storage device 508. In some embodiments, part or all of the computer program may be loaded into and/or installed on the device 500 via the ROM 502 and/or the communication unit 509. When the computer program is loaded into the RAM 503 and executed by the computation unit 501, one or more steps of the above method for determining information may be performed. Alternatively, in other embodiments, the computation unit 501 may be configured to perform the method for determining information through any other appropriate approach (e.g., by means of firmware).

Various embodiments of the systems and technologies described above herein may be implemented in digital electronic circuit systems, integrated circuit systems, field programmable gate arrays (FPGA), application specific integrated circuits (ASIC), application specific standard products (ASSP), system on chip (SOC), load programmable logic devices (CPLD), computer hardware, firmware, software, and/or combinations thereof. These various embodiments may include being implemented in one or more computer programs that may be executed and/or interpreted on a programmable system including at least one programmable processor, which may be a dedicated or general programmable processor that may receive data and instructions from a storage system, at least one input device, and at least one output device, and transmit data and instructions to the storage system, the at least one input device, and the at least one output device.

The program code for implementing the methods of the present disclosure may be written in any combination of one or more programming languages. These program codes can be provided to the processor or controller of general computer, dedicated computer or other programmable data processing device, so that when executed by the processor or controller, the program code enables the functions / operations specified in the flow chart and/or block diagram to be implemented. The program code can be executed completely on the machine, partially on the machine, partially on the machine and partially on the remote machine as a separate software package, or completely on the remote machine or server.

In the context of the present disclosure, a machine readable medium may be a tangible medium which may contain or store a program for use by, or used in combination with, an instruction execution system, apparatus or device. The machine readable medium may be a machine readable signal medium or a machine readable storage medium. The computer readable medium may include, but is not limited to, electronic, magnetic, optical, electromagnetic, infrared, or semiconductor systems, apparatuses, or devices, or any appropriate combination of the above. A more specific example of the machine readable storage medium will include an electrical connection based on one or more pieces of wire, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any appropriate combination of the above.

To provide interaction with a user, the systems and technologies described herein may be implemented on a computer that is provided with: a display apparatus (e.g., a CRT (cathode ray tube) or an LCD (liquid crystal display) monitor) configured to display information to the user; and a keyboard and a pointing apparatus (e.g., a mouse or a trackball) by which the user can provide an input to the computer. Other kinds of apparatuses may also be configured to provide interaction with the user. For example, feedback provided to the user may be any form of sensory feedback (e.g., visual feedback, auditory feedback, or tactile feedback); and an input may be received from the user in any form (including an acoustic input, a voice input, or a tactile input).

The systems and technologies described herein may be implemented in a computing system that includes a back-end component (e.g., as a data server), or a computing system that includes a middleware component (e.g., an application server), or a computing system that includes a front-end component (e.g., a user computer with a graphical user interface or a web browser through which the user can interact with an implementation of the systems and technologies described herein), or a computing system that includes any combination of such a back-end component, such a middleware component, or such a front-end component. The components of the system may be interconnected by digital data communication (e.g., a communication network) in any form or medium. Examples of the communication network include: a local area network (LAN), a wide area network (WAN), and the Internet.

The computer system may include a client and a server. The client and the server are generally remote from each other, and generally interact with each other through a communication network. The relationship between the client and the server is generated by virtue of computer programs that run on corresponding computers and have a clientserver relationship with each other.

It should be understood that the various forms of processes shown above may be used to reorder, add, or delete steps. For example, the steps disclosed in embodiments of the present disclosure may be executed in parallel, sequentially, or in different orders, as long as the desired results of the technical solutions mentioned in embodiments of the present disclosure can be implemented. This is not limited herein.

The above specific implementations do not constitute any limitation to the scope of protection of the present disclosure. It should be understood by those skilled in the art that various modifications, combinations, sub-combinations, and replacements may be made according to the design requirements and other factors. Any modification, equivalent replacement, improvement, and the like made within the principle of the present disclosure should be encompassed within the scope of protection of the present disclosure.

**Claims**

1. A method for determining information, the method comprising:

   acquiring (201) a reference vehicle speed and an actual vehicle speed of an autonomous driving vehicle;
   determining (202) feedback information based on the reference vehicle speed and the actual vehicle speed;
   determining (203) vehicle speed control information based on the feedback information and disturbance observation information, wherein the disturbance observation information is used to indicate a disturbance quantity currently experienced by the autonomous driving vehicle; and
   determining (204) target disturbance information based on vehicle speed information, the disturbance observation information and a preset estimation model, wherein the vehicle speed information is determined based on the vehicle speed control information.

2. The method according to claim 1, wherein the determining vehicle speed control information based on the feedback information and disturbance observation information, comprises:

   determining initial control information, based on the feedback information and the disturbance observation information; and
   inputting the initial control information into a vehicle longitudinal actuator of the autonomous driving vehicle, and determining an output of the vehicle longitudinal actuator as the vehicle speed control information.

3. The method according to claim 1, wherein the determining target disturbance information based on vehicle speed information, the disturbance observation information and a preset estimation model, comprises:

   determining initial control information, based on the feedback information and the disturbance observation information; and
   inputting the vehicle speed information and the initial control information into the preset estimation model to obtain the target disturbance information.

4. The method according to claim 3, wherein the inputting the vehicle speed information and the initial control information into the preset estimation model to obtain the target disturbance information, comprises:
   inputting the vehicle speed information and the initial control information into the preset estimation model, to obtain a target total disturbance quantity based on a mathematical calculation result of the preset estimation model.

5. The method according to any one of claims 2-4, wherein the method further comprises:
   updating the initial control information using the target disturbance information, and determining next moment target disturbance information using the updated initial control information.

6. An apparatus for determining information, the apparatus comprising:

   an acquisition unit, configured to acquire a reference vehicle speed and an actual vehicle speed of an autonomous driving vehicle;
   a first determining unit, configured to determine feedback information based on the reference vehicle speed and the actual vehicle speed;
   a second determining unit, configured to determine vehicle speed control information based on the feedback information and disturbance observation information, wherein the disturbance observation information is used to indicate a disturbance quantity currently experienced by the autonomous driving vehicle; and
   a third determining unit, configured to determine target disturbance information based on vehicle speed information, the disturbance observation information and a preset estimation model, wherein the vehicle speed information is determined based on the vehicle speed control information.

**7.** The apparatus according to claim 6, wherein the second determining unit comprises:

a first determining module, configured to determine initial control information based on the feedback information and the disturbance observation information; and
a second determining module, configured to input the initial control information into a vehicle longitudinal actuator of the autonomous driving vehicle, and determine an output of the vehicle longitudinal actuator as the vehicle speed control information.

**8.** The apparatus according to claim 6, wherein the third determining unit comprises:

a third determining module, configured to determine initial control information, based on the feedback information and the disturbance observation information; and
a fourth determining module, configured to input the vehicle speed information and the initial control information into the preset estimation model to obtain the target disturbance information.

**9.** The apparatus according to claim 8, wherein the fourth determining module comprises:
a disturbance quantity determining module, configured to input the vehicle speed information and the initial control information into the preset estimation model, to obtain a target total disturbance quantity based on a mathematical calculation result of the preset estimation model.

**10.** The apparatus according to any one of claims 7-9, wherein the apparatus further comprises:
a compensation unit, configured to update the initial control information using the target disturbance information, and determine next moment target disturbance information using the updated initial control information.

**11.** An electronic device, comprising:

at least one processor; and
a memory communicatively connected to the at least one processor; wherein,
the memory stores instructions executable by the at least one processor, and the instructions, when executed by the at least one processor, cause the at least one processor to perform the method according to any one of claims 1-5.

**12.** A non-transitory computer readable storage medium storing computer instructions, wherein, the computer instructions are used to cause the computer to perform the method according to any one of claims 1-5.

**13.** A computer program product, comprising a computer program, the computer program, when executed by a processor, causes the processor to implement the method according to any one of claims 1-5.

<u>100</u>

101                    102                    103

Fig. 1

<u>200</u>

201

Acquire a reference vehicle speed and an actual vehicle speed of an autonomous driving vehicle

202

Determine feedback information based on the reference vehicle speed and the actual vehicle speed

203

Determine vehicle speed control information based on the feedback information and disturbance observation information, where the disturbance observation information is used to indicate a disturbance quantity currently experienced by the autonomous driving vehicle

204

Determine target disturbance information based on vehicle speed information, the disturbance observation information and a preset estimation model, where the vehicle speed information is determined based on the vehicle speed control information

Fig. 2

Fig. 3

400

Fig. 4

500

501
Computation unit

502
ROM

503
RAM

504

505
I/O interface

506
Input unit

507
Output unit

508
Storage unit

509
Communication unit

Fig. 5